# FASCICULE DE BREVET EUROPEEN

(11) **EP 3 953 610 B1**
(45) Date de publication et mention de la délivrance du brevet: **22.10.2025**
(21) Numéro de dépôt: 20715391.7
(22) Date de dépôt: 03.04.2020
(51) Int. Cl.: F16G 13/20

(54) **ACTIONNEUR MULTILINÉAIRE RIGIDE À BRIN SOUPLE**
STARRER MULTILINEARER AKTUATOR MIT FLEXIBLEM STRANG
RIGID MULTILINEAR ACTUATOR WITH FLEXIBLE STRAND

(30) Priorité: 10.04.2019 FR 1903853
(43) Date de publication de la demande: 16.02.2022
(73) Titulaire: Serapid - France, 76370 Rouxmesnil-Bouteilles (FR)
(72) Inventeur: PRÉVOST, Romain, 76370 Rouxmesnil-Bouteilles (FR)
(74) Mandataire: Cabinet Netter
(86) Numéro de dépôt international: PCT/EP2020/059688
(87) Numéro de publication internationale: WO 2020/207933

(56) Documents cités:
- WO-A1-2016/047608
- FR-A1- 2 826 422
- JP-A- 2013 056 764

## Description

La présente invention concerne le domaine des actionneurs linéaires conçus pour transmettre des efforts de traction et de poussée avec un comportement de barre rigide.

Dans de nombreuses applications, un actionneur hydraulique est inadapté en raison de sa lenteur, de son encombrement longitudinal et de la présence d'huile et un actionneur électrique à vis offre des caractéristiques mécaniques limitées tout en étant aussi lent et encombrant longitudinalement.

Des chaînes de poussée ont alors été proposées pour soulever des charges. Les chaînes de poussée ont une configuration en T inversé, et la jambe du T étant de hauteur variable et commandée. La jambe du T forme une barre rigide. L'encombrement selon l'axe de la jambe est faible.

La demanderesse a ouvert la possibilité de bénéficier de cette technologie pour de petits automatismes avec l'actionneur linéaire du brevet EP 1 399 683 qui a connu une large diffusion. Deux brins souples portent des plots rigides dessinés pour venir s'imbriquer et se verrouiller ensemble. La masse du mécanisme est très faible.

Il existe un besoin d'actionneur à action conjuguée selon des axes distincts. Deux actionneurs distincts peuvent agir selon deux axes distincts mais nécessitent une synchronisation.

La demanderesse a mis au point un actionneur capable d'exercer un effort selon plusieurs axes. L'actionneur est multilinéaire en ce sens qu'il est conçu pour pousser selon au moins deux directions, notamment non parallèles.

L'actionneur multilinéaire est capable de transmettre un effort de traction et un effort de poussée selon au moins deux directions différentes. L'actionneur comprend au moins deux brins complémentaires d'actionnement réalisés à base de matériau synthétique souple, et munis sur une première de leurs faces de plots régulièrement espacés. Chaque plot est muni de deux faces frontales opposées, d'une face active transversale avant, d'une face active transversale arrière, d'une face active longitudinale séparant la face active transversale avant et la face active transversale arrière, et d'une face longitudinale de liaison avec le brin. Les plots équipant les premières faces respectives des deux brins d'actionnement situés en regard engrènent les uns dans les autres. Les faces actives transversales avant et arrière d'un plot de l'un des brins d'actionnement prennent respectivement appui contre les faces transversales arrière et avant respectives de deux plots voisins associés de l'autre brin d'actionnement, en définissant un tronçon s'étendant selon une ligne droite dans lequel les deux brins d'actionnement sont rassemblés solidairement. La forme et les dimensions de l'espace compris entre les plots dudit brin d'actionnement sont complémentaires à celles des plots voisins associés de l'autre brin d'actionnement. Des segments des premières faces respectives des deux brins d'actionnement séparant les plots, ainsi que les faces longitudinales desdits plots, sont munies de crans. Les crans de la face longitudinale d'un plot de l'un des brins d'actionnement coopèrent avec des crans correspondants du segment de la première face de l'autre brin située entre les deux plots associés audit plot en s'imbriquant dans lesdits crans correspondants lorsque les deux brins d'actionnement sont rassemblés solidairement, de sorte que le tronçon d'actionneur linéaire se comporte comme une barre rigide en une seule pièce. Lesdits brins d'actionnement comprennent, sur une deuxième de leurs faces, opposée à la première face, des dents régulièrement espacées. Ledit actionneur comprend un organe menant par brin d'actionnement. Chaque organe menant engrène avec les dents de la deuxième face d'un desdits brins d'actionnement pour entraîner ledit brin d'actionnement en translation. Ledit actionneur comprend un premier tronçon droit dans lequel les brins d'actionnement sont engrenés, un deuxième tronçon droit dans lequel les brins d'actionnement sont engrenés, et une région courbe située entre le premier tronçon droit et le deuxième tronçon droit, dans laquelle les brins d'actionnement sont écartés l'un de l'autre

Dans un mode de réalisation, l'actionneur est réalisé en matériaux amagnétiques.

Dans un mode de réalisation, les brins d'actionnement sont indépendants l'un de l'autre dans la région courbe.

Dans un mode de réalisation, dans la région courbe, le brin d'actionnement situé à l'intérieur de la courbe présente une concavité et le brin d'actionnement situé à l'extérieur de la courbe présente une convexité, une concavité et une convexité.

Dans un mode de réalisation, le brin d'actionnement situé à l'extérieur de la courbe compte plus de plots que le brin d'actionnement situé à l'intérieur de la courbe, dans ladite région courbe.

Dans un mode de réalisation, l'actionneur comprend un nombre pair de tronçons droits, par exemple 4 ou 6, dans lesquels les brins d'actionnement sont engrenés, et une région courbe située entre les tronçons droits dans laquelle les brins d'actionnement sont écartés les uns des autres. Un brin d'actionnement fait partie de deux tronçons droits adjacents angulairement. Un brin d'actionnement est engrené avec un brin d'actionnement avant et avec un brin d'actionnement arrière angulairement. Lesdits tronçons droits adjacents angulairement étant, lorsqu'en mouvement, l'un rentrant, l'autre sortant.

Dans un mode de réalisation, l'actionneur comprend un bâti supportant les organes menant. Le bâti peut comprendre une première et une deuxième parties articulées selon un axe parallèle aux axes des organes menant, et un verrou d'articulation capable de bloquer de manière libérable les première et une deuxième parties l'une par rapport à l'autre selon un angle choisi. Ledit angle choisi définit l'angle entre le premier tronçon droit et le deuxième tronçon droit. Ledit angle choisi peut-être compris entre 70 et 110°. On peut ainsi adapter l'angle entre les barres rigides selon l'application. Une fabrication sur mesure est évitée.

Dans un mode de réalisation, l'actionneur comprend quatre organes menant. Un organe menant est prévu par deuxième face de brin d'actionnement du premier tronçon droit et un organe menant est prévu par deuxième face de brin d'actionnement du deuxième tronçon droit.

Dans un mode de réalisation, chaque organe menant comprend une première denture en prise avec les dents de la deuxième face d'un des brins d'actionnement, et une deuxième denture concentrique à la première denture et en prise avec la deuxième denture de l'organe menant engrenant avec les dents de la deuxième face de l'autre brin d'actionnement, dans le premier tronçon droit.

Dans un mode de réalisation, chaque organe menant comprend une première denture en prise avec les dents de la deuxième face d'un des brins d'actionnement, et une deuxième denture concentrique à la première denture et en prise avec la deuxième denture de l'organe menant engrenant avec les dents de la deuxième face de l'autre brin d'actionnement, dans le deuxième tronçon droit.

Dans un mode de réalisation, un pignon moteur est en prise avec les deuxièmes dentures de deux desdits organes menant, un par tronçon droit. L'actionneur peut être pourvu d'un seul moteur électrique entraînant de manière synchrone les brins d'actionnement via le pignon moteur et les organes menant.

Dans un mode de réalisation, la deuxième denture est décalée par rapport à la première denture selon l'axe dudit organe menant. La deuxième denture est disposée au voisinage d'une face frontale des plots.

Dans un mode de réalisation, la première denture est droite.

Dans un mode de réalisation, la première denture est en chevrons.

Dans un mode de réalisation, la deuxième denture est hélicoïdale

Dans un mode de réalisation, la deuxième denture est en chevrons.

Dans un mode de réalisation, chaque organe menant comprend deux deuxièmes dentures d'un côté et de l'autre de la première denture. Les efforts sont exercés de manière symétrique.

Dans un mode de réalisation, le pignon moteur présente un axe disposé entre les brins d'actionnement dans la région courbe.

Dans un mode de réalisation, le pignon moteur est en prise avec les deuxièmes dentures de deux organes menant disposés du côté intérieur de la région courbe.

Dans un mode de réalisation, le pignon moteur est en prise avec les deuxièmes dentures de deux organes menant disposés du côté extérieur de la région courbe.

Dans un mode de réalisation, l'actionneur comprend quatre pignons de guidage en prise avec les brins d'actionnement. Un pignon de guidage est prévu par deuxième face de brin d'actionnement du premier tronçon droit et un pignon de guidage est prévu par deuxième face de brin d'actionnement du deuxième tronçon droit, à distance des organes menant, les pignons de guidage étant montés fous. Les barres rigides sont ainsi guidées de manière précise.

Dans un mode de réalisation, l'actionneur comprend quatre pignons de guidage en prise avec les brins d'actionnement. Un pignon de guidage est prévu par deuxième face de brin d'actionnement du premier tronçon droit et un pignon de guidage est prévu par deuxième face de brin d'actionnement du deuxième tronçon droit, à distance des organes menant, les pignons de guidage étant entraînés par les organes menant. Le couple transmissible est très élevé.

Dans un mode de réalisation, des guides sont disposés en contact avec la deuxième face du brin d'actionnement disposé à l'extérieur de la région courbe.

Dans un mode de réalisation, les organes menant sont pourvus de détrompeurs d'indexation pour le montage.

En d'autres termes, l'invention vise un actionneur actif dans plusieurs axes différents, notamment sécants. La motorisation peut être unique quel que soit le nombre d'axes de l'actionneur. Dans la variante à motorisation multiple, la synchronisation du mouvement de chaque tronçon formant une barre rigide est assurée par la commande des moteurs.

D'autres caractéristiques et avantages de l'invention apparaîtront à l'examen de la description détaillée ci-après, et des dessins annexés, sur lesquels :
[fig.1] la figure 1 est une vue schématique de côté en élévation d'un actionneur selon un aspect de l'invention,
[fig.2] la figure 2 illustre de façon schématique dans une vue en perspective d'un actionneur partiellement démonté selon un aspect de l'invention,
[fig.3] la figure 3 illustre de façon schématique, en perspective d'un actionneur, les plots ayant été omis, selon un aspect de l'invention,
[fig.4] la figure 4 illustre de façon schématique, en perspective d'un actionneur, les plots ayant été omis, selon un aspect de l'invention,
[fig.5] la figure 5 illustre de façon schématique, en perspective d'un actionneur à angle réglable, les plots ayant été omis, selon un aspect de l'invention, et
[fig.6] la figure 6 illustre de façon schématique, en perspective d'un actionneur quadri linéaire, selon un aspect de l'invention. Les dessins annexés pourront non seulement servir à compléter l'invention, mais aussi contribuer à sa définition, le cas échéant.

Dans de multiples applications, le déplacement d'un objet sur une course rectiligne de quelques centimètres à quelques décimètres en exerçant un effort de quelques dixièmes de Newton à quelques centaines de Newtons nécessite un mécanisme lourd, encombrant, peu adapté à son environnement et bruyant.

Dans le domaine du déploiement d'écrans, de volets, de panneaux, d'afficheurs, le besoin existe d'un actionneur à double effet et double direction et/ou d'un actionneur à encombrement en L et non plus en T.

Deux repères tridimensionnels sont définis, l'un (X1, Y1, Z) correspondant à un premier tronçon droit et l'autre (X2, Y2, Z) correspondant à un deuxième tronçon droit. L'axe X1, X2 est l'axe longitudinal du tronçon droit. L'axe Y1, Y2 est l'axe transversal du tronçon droit s'étendant d'un brin à l'autre. L'axe Z commun définit l'axe de rotation des éléments tournants de l'actionneur. Les plans (X1, Y1) et (X2, Y2) sont confondus.

Dans un mode de réalisation représenté, un actionneur 1 comprend deux brins complémentaires d'actionnement 2 et 3. Les brins d'actionnement 2 et 3 sont identiques. Les brins d'actionnement 2 et 3 sont réalisés à partir de matériau synthétique souple, par exemple du PU, éventuellement armé, par exemple avec des fibres aramides. Les brins d'actionnement 2 et 3 sont disposés parallèlement le long de certaines portions de l'actionneur 1, selon l'axe longitudinal X1, X2, et de manière plus écartée l'un de l'autre le long d'autres portions de l'actionneur 1.

Les brins d'actionnement 2 et 3 présentent une forme de courroie de longueur comprise entre quelques décimètres et quelques mètres, de largeur de l'ordre de quelques centimètres selon l'axe Z et d'épaisseur de l'ordre de quelques millimètres. Les brins d'actionnement 2 et 3 présentent des bords lisses 4 s'étendant sur l'épaisseur. Lesdits bords 4 sont parallèles. Lesdits bords 4 sont plans dans un plan (X1, Y1) ou (X2, Y2). Les brins d'actionnement 2 et 3 présentent des premières et deuxièmes faces 5, 6 s'étendant sur la largeur. Les premières et deuxièmes faces 5, 6 sont opposées. Les premières faces 5, intérieures, sont disposées en face de l'autre brin d'actionnement et les deuxièmes faces 6, extérieures, du côté opposé à l'autre brin d'actionnement. Les premières et deuxièmes faces 5, 6 sont orientées selon l'axe Z.

L'actionneur 1 comprend des plots 7 régulièrement espacés disposés sur les premières faces 5 des brins. Les plots 7 sont identiques. Les plots 7 sont complémentaires et ainsi un plot 7 est apte à venir en prise entre et avec deux plots 7 associés à l'autre brin. Les plots 7 en prise sont en position tête-bêche. Les plots 7 sont réalisés en matériau synthétique rigide, par exemple du POM, le cas échéant muni d'une charge minérale, par exemple des fibres de verre. Les plots 7 sont fixés au brin par concordance de forme et vissage ou rivetage.

Chaque plot 7 est muni de deux faces frontales opposées 8. Les faces frontales 8 sont planes dans un plan (X1, Y1) ou (X2, Y2). Les faces frontales 8 sont coplanaires avec le bord du brin correspondant. Les faces frontales 8 sont coplanaires avec les faces frontales 8 des plots 7 complémentaires et avec le bord 4 du brin opposé.

Chaque plot 7 est muni d'une face active transversale avant 9 et d'une face active transversale arrière 10, orientées selon l'axe Z. La notion d'avant et d'arrière est ici une convention en raison du mouvement de va et vient de l'actionneur 1. On entend par face active une face coopérant avec les plots 7 complémentaires et/ou le brin complémentaire.

Chaque plot 7 est muni d'une face active longitudinale 11 séparant la face active transversale avant 9 et la face active transversale arrière 10, et d'une face longitudinale de liaison 12 avec le brin auquel ledit plot 7 est fixé. La face active longitudinale 11 est de manière globale selon un plan (X1, Z) ou (X2, Z). La face active longitudinale 11 est munie de reliefs complémentaires à la face intérieure 5 du brin opposé.

La face longitudinale de liaison 12 est profilée selon l'axe Z. La face longitudinale de liaison 12 est munie de reliefs complémentaires à la face intérieure 5 dudit brin. La face intérieure 5 dudit brin peut être munie d'un bossage 13 de section trapézoïdale venant dans une rainure 14 de la face longitudinale de liaison 12. Le bossage 13 peut être de hauteur selon l'axe Z supérieur à la hauteur desdits reliefs complémentaires de la face active longitudinale 11. Le bossage 13 est entouré selon l'axe X1, X2 par des jupes 15 du plot 7 assurant le centrage du plot 7 sur le bossage 13. Les jupes 15 du plot 7 viennent en contact avec le fond de la face intérieure 5 dudit brin voisin du bossage 13.

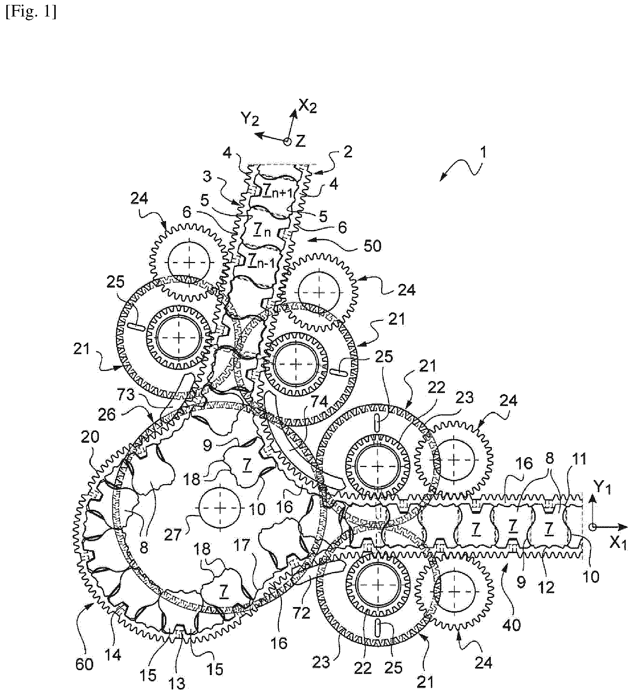

Ainsi, les plots 7 équipent les premières faces 5 respectives des deux brins d'actionnement 2, 3 lesquels sont situés en regard sur tout ou partie de la course de l'actionneur 1. Les plots 7 sont configurés pour engrener les uns dans les autres dans des zones d'engrènement dans lesquelles les brins d'actionnement 2, 3 se rapprochent l'un de l'autre et pour désengrener les uns des autres dans des zones de désengrènement dans lesquelles les brins d'actionnement 2, 3 s'éloignent l'un de l'autre. Dans les zones d'engrènement, les faces actives transversales avant 9 et arrière 10 d'un plot 7ₙ de rang n, voir figure 1, de l'un des brins d'actionnement 2, 3 prennent respectivement appui contre les faces transversales arrière 10 et avant 9 respectives de deux plots 7ₙ₋₁ et 7ₙ₊₁ voisins associés de l'autre brin d'actionnement 3, 2. Lesdits plots 7ₙ₋₁ et 7ₙ₊₁ voisins sont de rang immédiatement inférieur et supérieur. Après engrènement, les deux brins et les plots 7ₙ₋₁, 7 et 7ₙ₊₁ engrenés définissant un tronçon s'étendant selon une ligne droite. Le tronçon droit est résistant en compression et en flambage ainsi qu'en cisaillement entre les plots 7.

Les faces actives transversales avant 9 et arrière 10 d'un plot 7 présentent une zone centrale et deux zones de bord entourant la zone centrale. Dans le mode de réalisation représenté, la zone centrale est sensiblement plane selon un plan (Y1, Z) ou (Y2, Z). La zone centrale est normale à l'axe de déplacement du plot 7 ou axe longitudinal X1, X2. Les zones de bord sont symétriques par rapport à un plan (X1, Y1) passant par l'axe longitudinal et à équidistance des faces latérales des plots 7. Les zones de bord présentent une double courbure, avec une portion concave proximale et une portion convexe distale du brin d'actionnement 2, 3 solidaire du plot. Les plots 7 sont symétriques par rapport à un plan (Y1, Z).

Entre les zones de bord et la zone centrale est présente une surface de stabilisation ou redan parallèle à un plan (X1, Y1). Les zones de bord sont en creux par rapport à la zone centrale dans la portion concave et en relief dans la portion convexe. La surface de stabilisation normale à l'axe Z interdit un décalage d'un plot 7 par rapport aux deux plots 7 voisins en prise selon l'axe Z. Deux plots 7 engrenés ensemble sont empêchés de glisser l'un par rapport à l'autre dans le sens latéral - axe Z - par la différence de forme entre les zones de bord d'une part et la zone centrale d'autre part. Deux plots 7 engrenés sont empêchés de se séparer l'un de l'autre dans le sens transversal - axe Y1, Y2 - par la complémentarité de forme entre les portions concaves et convexes. La portion convexe avant d'un plot 7ₙ de rang n vient dans la portion concave arrière d'un plot 7ₙ₊₁ de rang n+1 voisine du brin d'actionnement 3, 2 du plot 7ₙ₊₁ de rang n+1. La portion concave avant d'un plot 7ₙ de rang n voisine du brin d'actionnement 2, 3 du plot 7ₙ de rang n reçoit la portion convexe arrière d'un plot 7ₙ₊₁ de rang n+1. Il y a in-terverrouillage.

Deux plots 7 successifs solidaires du même brin d'actionnement 2, 3 disposent d'une liberté de pivotement de l'un par rapport à l'autre hors des zones d'engrènement. Le pivotement est selon un axe latéral Z. Dans les zones d'engrènement, chaque plot 7 est en appui sur les plots 7 adjacents assurant ainsi la résistance à la compression. La résistance à la traction est assurée par les brins d'actionnement 2, 3 rigides en traction. La résistance à la torsion et au flambage est assurée par la concordance des formes, l'appui mutuel des plots 7 et la rigidité en traction des brins d'actionnement 2, 3. Lorsque les deux brins d'actionnement 2, 3 sont rassemblés solidairement, la forme et les dimensions de l'espace compris entre les plots 7 dudit brin d'actionnement 2, 3 sont complémentaires à la forme et aux dimensions des plots 7 voisins associés de l'autre brin d'actionnement 3, 2.

En outre, les premières faces 5 respectives des deux brins d'actionnement 2, 3 comprennent des segments séparant les plots 7. Lesdits segments 16 séparant les plots 7 sont libres lorsque les brins d'actionnement sont écartés. Lesdits segments 16 sont de manière générale selon un plan (X1, Z) ou (X2, Z) dans les tronçons droits.

Lesdits segments 16 sont munis de crans 17. Les faces actives longitudinales 12 desdits plots 7 - opposées à la première face 5 du brin d'actionnement porteur desdits plots 7 et en regard de ou en contact avec la première face 5 de l'autre brin d'actionnement - sont munies de crans 18. Les crans 17 des segments 16 et les crans 18 des plots 7 sont complémentaires. Les crans 17 des segments 16 sont profilés selon un axe latéral Z. Les crans 17 et 18 bloquent le cisaillement longitudinal entre le plot 7 d'un brin d'actionnement 2, 3 et l'autre brin d'actionnement 3, 2. Les crans 17 et 18 présentent des pentes assez faibles pour permettre le désengrènement.

Les crans 17 de la face active longitudinale 12 d'un plot 7ₙ de l'un des brins d'actionnement coopèrent avec les crans 18 correspondants de la première face 5 de l'autre brin d'actionnement située entre les deux plots 7ₙ₋₁ et 7ₙ₊₁ associés audit plot 7. Lesdits crans 17 s'imbriquent dans lesdits crans 18 correspondants lorsque les deux brins d'actionnement 2 et 3 sont rassemblés solidairement. Ainsi, le tronçon d'actionneur 1 linéaire se comporte comme une barre rigide.

Lesdits brins d'actionnement 2, 3 présentent une deuxième face 6 opposée à la première face 5. La deuxième face 6 est extérieure, notamment par rapport à un tronçon droit. Sur ladite deuxième face 6, lesdits brins d'actionnement 2, 3 comprennent des dents 20 régulièrement espacées formant crémaillère. Les dents 20 sont profilées selon un axe transversal. Les dents 20 sont régulièrement réparties. Les dents 20 sont de période constante. Les dents 20 présentent une hauteur constante. L'actionneur 1 comprenant un organe menant 21 par brin d'actionnement 2, 3. Chaque organe menant 21 engrène avec les dents 20 de la deuxième face 6 d'un desdits brins. L'organe menant 21 est ainsi capable d'entraîner ledit brin d'actionnement 2, 3 en translation selon l'axe X1, X2.

Ledit actionneur 1 comprend un premier tronçon droit 40 dans lequel les brins d'actionnement 2, 3 sont engrenés, un deuxième tronçon droit 50 dans lequel les brins d'actionnement 2, 3 sont engrenés, et une région courbe 60 située entre le premier tronçon droit 40 et le deuxième tronçon droit 50, dans laquelle les brins d'actionnement 2, 3 sont écartés l'un de l'autre. Le premier tronçon droit 40 et le deuxième tronçon droit 50 sont d'axes longitudinaux X1 et X2 sécants ou parallèles.

Les brins d'actionnement 2, 3 sont indépendants l'un de l'autre dans la région courbe 60. Dans le cas de premier tronçon droit 40 et de deuxième tronçon droit 50 d'axes longitudinaux X1 et X2 sécants, le brin d'actionnement 2 situé à l'intérieur de la courbe présente une concavité. Le brin d'actionnement 3 situé à l'extérieur de la courbe présente une convexité, une concavité et une convexité. En d'autres termes, le brin d'actionnement 3 en partant du premier tronçon droit 40 s'écarte de l'axe X1, puis s'en rapproche et vient en intersection avec et en partant du deuxième tronçon droit 50 s'écarte de l'axe X2, puis s'en rapproche et vient en intersection avec.

Le brin d'actionnement 3 situé à l'extérieur de la courbe compte dans ladite région courbe 60 plus de plots 7 que le brin d'actionnement 2 situé à l'intérieur de la courbe. Ici le brin extérieur 3 compte six plots 7 de plus que le brin intérieur.

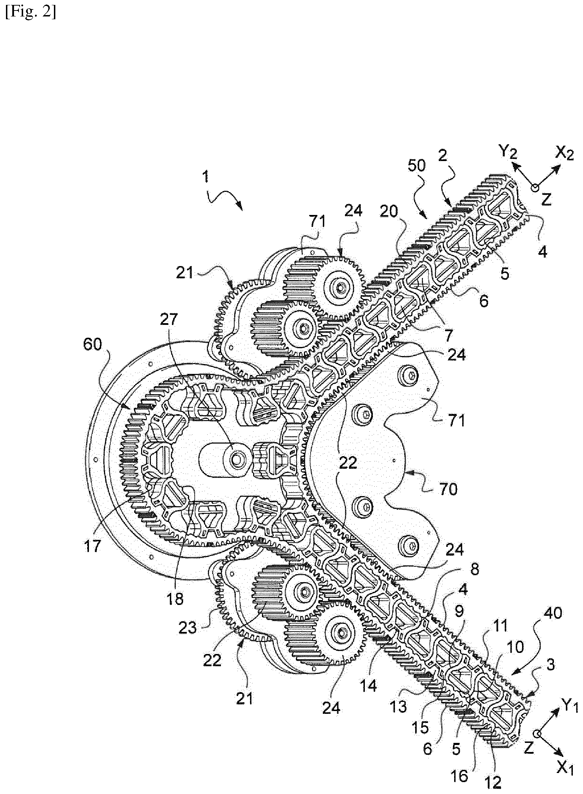

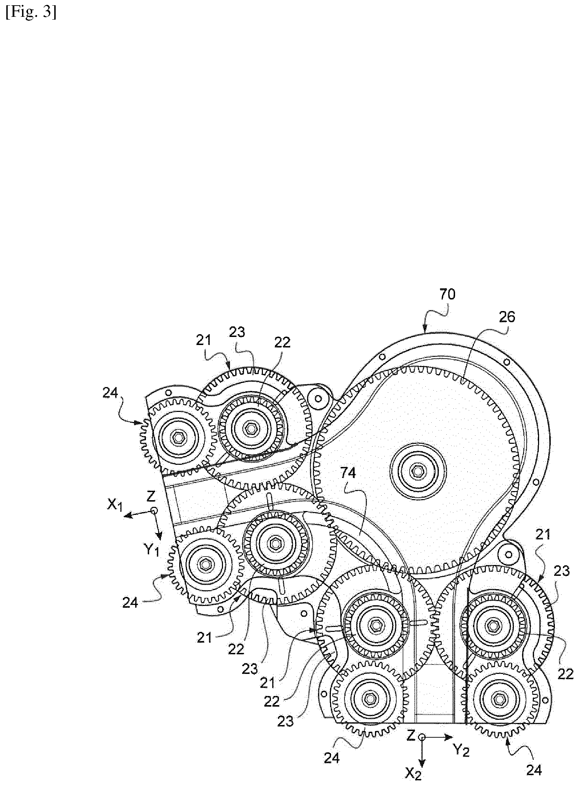

Chaque organe menant 21 comprend un pignon de largeur sensiblement égale aux dents 20 de la deuxième face 6 desdits brins. Les dents 20 s'étendent d'un bord à l'autre desdits brins. Ici, les dents 20 desdits brins et les dents des pignons sont droites. Le pignon forme une première denture 22. Alternativement, une denture en chevrons est fournie coopérant avec une denture en chevrons de la crémaillère de la deuxième face 6 desdits brins. Chaque organe menant 21 est d'axe de rotation parallèle à l'axe Z. Dans le mode de réalisation représenté sur les figures 1 à 3, quatre organes menant 21 sont montés. Un premier organe menant 21 coopère par engrènement avec la deuxième face 6 du brin d'actionnement 3 du premier tronçon droit 40 situé à l'extérieur de la courbe dans la région courbe 60. Un deuxième organe menant 21 coopère par engrènement avec la deuxième face 6 du brin d'actionnement 3 du deuxième tronçon droit 50 situé à l'extérieur de la courbe dans la région courbe 60. Un troisième organe menant 21 coopère par engrènement avec la deuxième face 6 du brin d'actionnement 2 du premier tronçon droit 40 situé à l'intérieur de la courbe dans la région courbe 60. Un quatrième organe menant 21 coopère par engrènement avec la deuxième face 6 du brin d'actionnement 2 du deuxième tronçon droit 50 situé à l'intérieur de la courbe dans la région courbe 60. Ainsi, chaque brin d'actionnement 2, 3 est mis en mouvement par deux organes menant 21 situés de part et d'autre de la région courbe 60. D'un autre point de vue, le premier tronçon droit 40 est mis en mouvement par deux organes menant 21 situés de part et d'autre dudit premier tronçon droit 40 Le deuxième tronçon droit 50 est mis en mouvement par deux organes menant 21 situés de part et d'autre dudit deuxième tronçon droit 50.

Avantageusement, les organes menant 21 d'une paire d'organes menant 21 montés de part et d'autre d'un desdits tronçons droits 40, 50 présentent des axes situés dans un même plan normal à l'axe longitudinal X1, X2 dudit tronçon droit.

La première denture 22 ou pignon est en prise avec les dents 20 - crémaillère - de la deuxième face 6 d'un des brins d'actionnement 2, 3. Chaque organe menant 21 comprend une deuxième denture 23 concentrique à la première denture 22 et en prise avec la deuxième denture 23 de l'organe menant 21 engrenant avec les dents 20 de la deuxième face 6 de l'autre brin d'actionnement du même tronçon droit. La première denture 22 est de petit diamètre et la deuxième denture 23 est de grand diamètre. Les premières dentures des organes menant 21 présentent des nombres de dents égaux. Les deuxièmes dentures des organes menant 21 présentent des nombres de dents égaux. Ainsi, pour le premier tronçon droit 40, les organes menant 21 sont synchronisés par engrènement. Pour le deuxième tronçon droit 50, les organes menant 21 sont synchronisés par engrènement.

Un pignon moteur 26 est en prise avec les deuxièmes dentures de deux desdits organes menant 21, chacun associé à l'un des tronçons droits. Le pignon moteur 26 est d'axe Z. Le pignon moteur 26 entraîne un premier organe menant 21 de chacune desdites paires d'organes menant 21. Chaque paire d'organes menant 21 est synchronisée par engrènement.

Dans le mode de réalisation représenté, le pignon moteur 26 est disposé avec un axe situé entre les brins d'actionnement 2, 3 dans la région courbe 60. Un arbre 27 de pignon moteur 26 peut être monté traversant entre les brins d'actionnement 2, 3 dans la région courbe 60 selon ledit axe. Le pignon moteur 26 est en prise avec les organes menant 21 ayant des axes situés du côté concave du brin d'actionnement 2 situé à l'intérieur de la courbe. Le pignon moteur 26 comprend un nombre de dents supérieur au nombre de dents des deuxièmes dentures des organes menant 21.

Dans un autre mode de réalisation, le pignon moteur 26 est disposé avec un axe situé entre les brins d'actionnement 2, 3 dans la région courbe 60. Le pignon moteur 26 est en prise avec les organes menant 21 ayant des axes situés du côté du brin d'actionnement 3 situé à l'extérieur de la courbe. Le pignon moteur 26 comprend un nombre de dents supérieur au nombre de dents des deuxièmes dentures et supérieur au nombre de dents du pignon moteur 26 du mode de réalisation précédent.

Dans un autre mode de réalisation, le pignon moteur 26 est disposé avec un axe situé du côté concave du brin d'actionnement situé à l'intérieur de la courbe. Le pignon moteur 26 est en prise avec les organes menant 21 ayant des axes situés du côté du brin d'actionnement 2 situé à l'intérieur de la courbe. Le pignon moteur 26 comprend un nombre de dents inférieur au nombre de dents du pignon moteur 26 des deux modes de réalisation précédents. Le nombre de dents du pignon moteur 26 est inférieur ou égal au nombre de dents des deuxièmes dentures. A vitesse linéaire conservée, la vitesse de rotation du pignon moteur 26 est plus élevée et le couple plus faible. L'encombrement est réduit au voisinage du brin d'actionnement situé à l'extérieur de la courbe. Le pignon moteur 26 est entraîné par une motorisation électrique, avec réducteur ou en prise directe.

Dans un organe menant 21, la deuxième denture 23 est décalée par rapport à la première denture 22 selon l'axe dudit organe menant 21. La deuxième denture 23 est disposée en regard et au voisinage d'une face frontale des plots 7.

Dans un mode de réalisation, chaque organe menant 21 est symétrique par rapport à un plan (X1, Y1) normal à son axe et passant le milieu de la première denture 22. Ainsi, chaque organe menant 21 comprend deux deuxièmes dentures 23 disposées d'un côté et de l'autre de la première denture 22. Les deuxièmes dentures 23 d'une paire d'organes menant 21 sont montées d'un côté et de l'autre du tronçon droit 40, 50 dont les brins d'actionnement 2, 3 engrènent avec les premières dentures 22 de ladite paire d'organes menant 21. Lesdites deuxièmes dentures 23 d'une paire d'organes menant 21 sont en engrènement l'une avec l'autre.

La première denture 22 est droite ou en chevrons. La deuxième denture 23 est hélicoïdale ou en chevrons.

En outre, sont montés quatre pignons de guidage 24 des brins d'actionnement 2, 3. Une paire de pignons de guidage 24 est prévue pour chaque tronçon droit. Les pignons de guidage 24 augmentent la stabilité du tronçon droit correspondant.

Les pignons de guidage 24 sont en prise par engrènement avec les brins d'actionnement 2, 3. Un desdits pignons de guidage 24 coopère avec chaque deuxième face 6 de brin d'actionnement du premier tronçon droit 40. Un desdits pignons de guidage 24 coopère avec chaque deuxième face 6 de brin d'actionnement 2, 3 du deuxième tronçon droit 50. Les axes des pignons de guidage 24 sont disposés à distance des axes des organes menant 21. Les axes des pignons de guidage 24 sont parallèles à l'axe Z. Les axes des pignons de guidage 24 sont disposés dans un même plan (Y1, Z) ou (Y2, Z). Les pignons de guidage 24 sont disposés à distance des premières dentures des organes menant 21. Avec les pignons de guidage 24, chaque tronçon droit 40, 50 se comporte de manière similaire à une poutre encastrée.

Dans le mode de réalisation représenté, les pignons de guidage 24 sont montés fous. Dans un autre mode de réalisation, les pignons de guidage 24 sont entraînés par les organes menant 21. Un couple élevé peut être transmis au tronçon droit correspondant. L'entraînement peut être effectué par courroie ou, préférablement, par un pignon intermédiaire non représenté.

Les premières dentures 22 présentent ici 26 dents. Des dents de module plus petit peuvent être prévues pour pouvoir réduire le diamètre des premières dentures 22 des organes menant 21 et l'encombrement.

Un bâti 70 est prévu supportant les organes menant 21 et les pignons de guidage 24, le cas échéant. Un bâti 70 comprend des platines 71 supportant les arbres du pignon moteur 26, des organes menant 21 et des pignons de guidage 24. En outre, deux guides 72, 73 sont montés pour guider le brin d'actionnement extérieur 3 dans la concavité dudit brin d'actionnement extérieur 3 dans la région courbe 60. Les guides 72, 73 sont des patins revêtus d'une couche à faible frottement, dans le mode de réalisation représenté, ou des rouleaux cylindriques. Les guides 72, 73 sont en contact avec la deuxième face 6 du brin d'actionnement extérieur 3. Les guides 72, 73 sont supportés par les platines 71. La position du brin d'actionnement intérieur 2 est déterminée au montage par le nombre de dents 20 entre la première denture 22 de l'organe menant 21 en prise avec le brin d'actionnement intérieur 2 et située du côté avant et la première denture 22 de l'organe menant 21 en prise avec le brin d'actionnement intérieur 2 et située du côté arrière. Pour faciliter le montage par l'opérateur, un guide 74 peut être prévu à l'intérieur de la région courbe 60, pour guider le brin d'actionnement intérieur 2 dans la concavité dudit brin d'actionnement intérieur 2 dans la région courbe 60. Le guide 74 peut comprendre un patin revêtu d'une couche à faible frottement, dans le mode de réalisation représenté, ou un rouleau cylindrique. Le guide 74 est en contact avec la deuxième face 6 du brin d'actionnement intérieur 2. Le guide 74 est supporté par les platines 71.

Dans le mode de réalisation des figures 1 à 4, le bâti 70 est rigide. Les plots 7 du brin d'actionnement extérieur 3 viennent très proches les uns des autres par leurs faces actives transversales avant 9 et arrière 10, voire en contact. Ainsi, le mode représenté est le plus compact possible en termes d'encombrement sur l'extérieur de la région courbe 60. On peut prévoir une région courbe 60 présentant une excroissance plus importante du brin d'actionnement extérieur 3 vers l'extérieur. Les notions d'intérieur et d'extérieur sont, ici, relatives à l'angle formé par les axes X1 et X2.

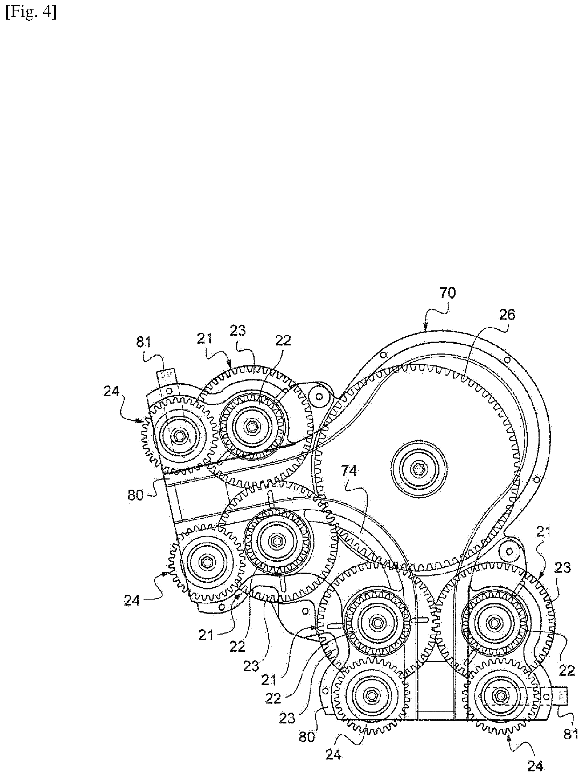

Dans le mode de réalisation de la figure 4, l'actionneur comprend un organe de réglage 81 de la distance - selon l'axe Y1, Y2 - entre les pignons de guidage 24 montés de part et d'autre d'un tronçon droit. L'organe de réglage 81 comprend ici une vis munie d'une empreinte d'entraînement et en prise avec un alésage fileté supporté par une partie 80 du bâti 70.

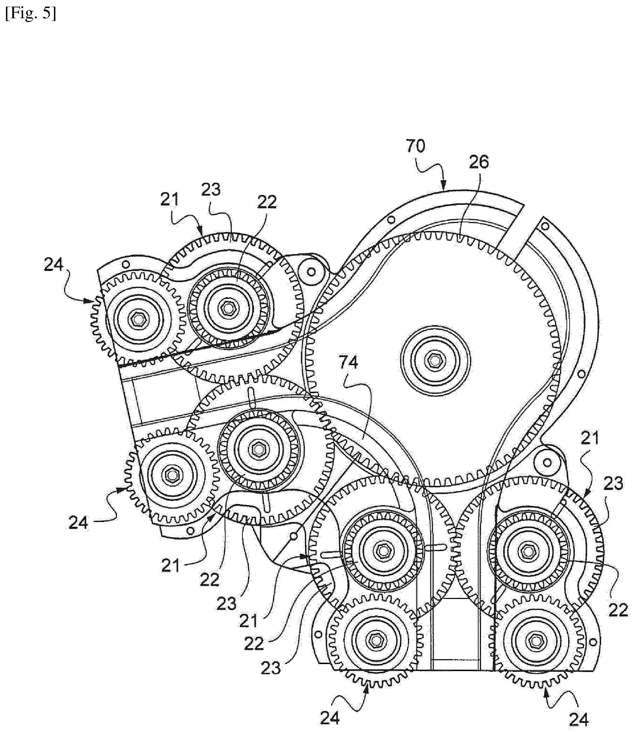

Dans le mode de réalisation de la figure 5, le bâti 70 peut comprendre une première et une deuxième parties articulées selon un axe parallèle aux axes des organes menant 21, et un verrou d'articulation capable de bloquer de manière libérable les première et deuxième parties l'une par rapport à l'autre selon un angle choisi, ledit angle choisi définissant l'angle entre le premier tronçon droit 40 et le deuxième tronçon droit 50. L'angle est réglable dans une plage comprise entre 70 à 110°, plus particulièrement entre 75 et 90°.

Les organes menant 21 sont pourvus de détrompeurs 25 d'indexation pour le montage. Ainsi l'opérateur procède à l'orientation des organes menant 21 permettant un bon fonctionnement de l'actionneur 1.

Selon que l'on considère le brin d'actionnement ou le tronçon droit, l'actionneur 1 comprend au moins une paire de brins d'actionnement, ou un premier tronçon droit, une région courbe et un deuxième tronçon droit.

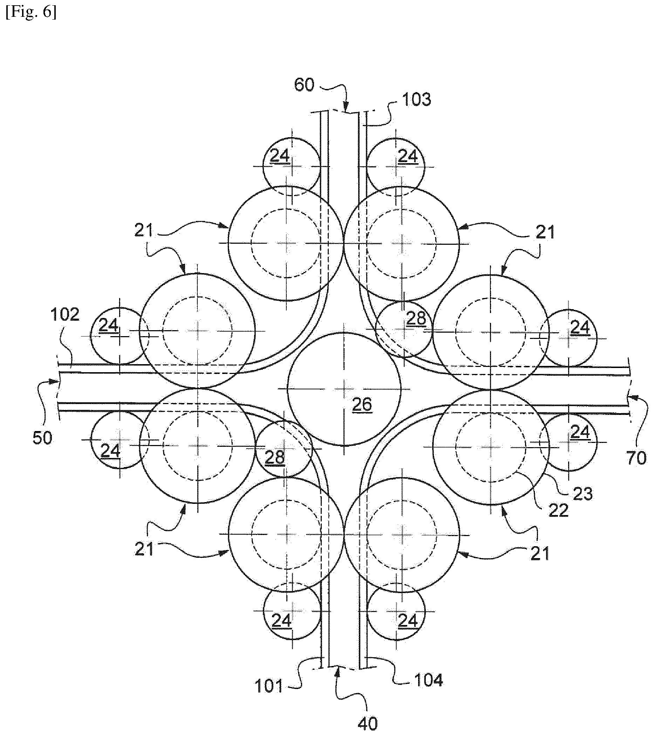

Dans un autre mode de réalisation, l'actionneur 1 est quadri linéaire, voir figure 6, ou hexa linéaire, octo linéaire, etc.. En d'autres termes, l'actionneur 1 comprend un nombre pair de tronçons droits. Sur la figure 6, les plots ont été omis pour améliorer la lisibilité. L'actionneur 1 présente une forme de croix présentant entre ses branches les angles indiqués ci-dessus. Sur la figure 6, l'angle est de 90°. L'angle possible entre deux tronçons droits voisins s'étend sur une plage plus large que dans le mode de réalisation précédent. par exemple à partir de 5 ou 10° et jusqu'à 170 ou 175°.

Un premier brin d'actionnement 101 appartient pour partie à un premier tronçon droit 40 et pour partie à un deuxième tronçon droit 50. Un deuxième brin d'actionnement 102 appartient pour partie au deuxième tronçon droit 50 avec engrènement avec le premier brin d'actionnement 101 et pour partie à un troisième tronçon droit 60. Un troisième brin d'actionnement 103 appartient pour partie au troisième tronçon droit 60 avec engrènement avec le deuxième brin d'actionnement 102 et pour partie à un quatrième tronçon droit 70. Un quatrième brin d'actionnement 104 appartient pour partie au quatrième tronçon droit 70 avec engrènement avec le troisième brin d'actionnement 103 et pour partie au premier tronçon droit 40 avec engrènement avec le premier brin d'actionnement 101. Chaque brin d'actionnement présente une portion à convexité orientée vers le centre de l'actionneur 1. Chaque brin d'actionnement est dépourvu de changement de courbure. Chaque brin d'actionnement possède une première portion droite au sein d'un tronçon droit, une deuxième portion droite au sein d'un autre tronçon droit et une portion courbe à une courbure entre les première et deuxième portions droites.

Le pignon moteur 26 est disposé au centre de l'actionneur 1. Le pignon moteur 26 engrène deux pignons de renvoi 28. Chaque pignon de renvoi 28 entraîne deux organes menant 21, lesdits deux organes menant 21 distants l'un de l'autre. Chaque pignon de renvoi 28 engrène la deuxième denture 23 de chacun desdits deux organes menant 21. Chacun des tronçons droits 40, 50, 60 et 70 est en prise avec l'un des organes menant 21 entraîné par un pignon de renvoi 28 et l'organe menant 21 entraîné par l'organe menant 21 précédant. Les premier et troisième brins d'actionnement 101 sont entraînés chacun par un organe menant 21 entraîné par un pignon de renvoi 28. Les deuxième et quatrième brins d'actionnement 101 sont entraînés chacun par un organe menant 21 entraîné par un autre organe menant 21 lui-même entraîné par un pignon de renvoi 28. La mise en rotation des organes menant 21 provoque dans un sens l'allongement des premier et troisième tronçons droits et le raccourcissement des deuxième et quatrième tronçons droits, dans un sens opposé l'allongement des deuxième et quatrième tronçons droits et le raccourcissement des premier et troisième tronçons droits. Le pignon moteur 26 peut être unique et entraîner quatre organes menant 21 maîtres, chaque organe menant maître entraînant à son tour un organe menant esclave avec lequel il forme une paire d'organes menant 21 associés au même tronçon droit.

## Revendications

1. Actionneur (1) multilinéaire capable de transmettre un effort de traction et un effort de poussée selon au moins deux directions différentes selon des axes sécants, ledit actionneur (1) comprenant au moins deux brins complémentaires d'actionnement (2, 3) réalisés à base de matériau synthétique souple, et munis sur une première de leurs faces de plots (7) régulièrement espacés, chaque plot (7) étant muni de deux faces frontales opposées (8), d'une face active transversale avant (9), d'une face active transversale arrière (10), d'une face active longitudinale (11) séparant la face active transversale avant (9) et la face active transversale arrière (10), et d'une face longitudinale de liaison (12) avec le brin, les plots (7) équipant les premières faces (5) respectives des deux brins d'actionnement (2, 3) situés en regard s'engrènent les uns dans les autres, et les faces actives transversales avant et arrière (9, 10) d'un plot (7) de l'un des brins d'actionnement (2, 3) prennent respectivement appui contre les faces transversales arrière et avant respectives de deux plots (7) voisins associés de l'autre brin d'actionnement (3, 2), en définissant un tronçon s'étendant selon une ligne droite dans lequel les deux brins d'actionnement (2, 3) sont rassemblés solidairement, et la forme et les dimensions de l'espace compris entre les plots (7) dudit brin d'actionnement sont complémentaires à celles des plots (7) voisins associés de l'autre brin d'actionnement, des segments (16) des premières faces (5) respectives des deux brins d'actionnement (2, 3) séparant les plots (7), ainsi que les faces longitudinales desdits plots (7) sont munies de crans, les crans de la face longitudinale d'un plot (7) de l'un des brins d'actionnement (2, 3) coopérant avec des crans correspondants du segment de la première face de l'autre brin située entre les deux plots (7) associés audit plot (7) en s'imbriquant dans lesdits crans correspondants lorsque les deux brins d'actionnement (2, 3) sont rassemblés solidairement, de sorte que le tronçon d'actionneur (1) linéaire se comporte comme une barre rigide en une seule pièce, lesdits brins d'actionnement (2, 3) comprenant sur une deuxième de leurs faces, opposée à la première face (5), des dents (20) régulièrement espacées, ledit actionneur (1) comprenant un organe menant (21) par brin d'actionnement (2, 3), chaque organe menant (21) engrenant avec les dents (20) de la deuxième face (6) d'un desdits brins d'actionnement (2, 3) pour entraîner ledit brin d'actionnement (2, 3) en translation, ledit actionneur (1) comprenant un premier tronçon droit (40) dans lequel les brins d'actionnement (2, 3) sont engrenés, un deuxième tronçon droit (50) dans lequel les brins d'actionnement (2, 3) sont engrenés, et une région courbe (60) située entre le premier tronçon droit (40) et le deuxième tronçon droit (50), dans laquelle les brins d'actionnement (2, 3) sont écartés l'un de l'autre.

2. Actionneur (1) selon la revendication 1, dans lequel les brins d'actionnement (2, 3) sont indépendants l'un de l'autre dans la région courbe (60), le brin d'actionnement situé à l'intérieur de la courbe présente une concavité et le brin d'actionnement situé à l'extérieur de la courbe présente une convexité, une concavité et une convexité, et compte dans ladite région courbe (60) plus de plots (7) que le brin d'actionnement situé à l'intérieur de la courbe.

3. Actionneur (1) selon la revendication 1, comprenant un nombre pair de tronçons droits (40, 50) au sein desquels les brins d'actionnement (2, 3) sont engrenés, et une région courbe (60) située entre les tronçons droits (40, 50) dans laquelle les brins d'actionnement (2, 3) sont écartés les uns des autres, un brin d'actionnement (2, 3) faisant partie de deux tronçons droits (40, 50) et engrené avec un brin d'actionnement avant et avec un brin d'actionnement arrière angulairement, lesdits tronçons droits adjacents angulairement étant, lorsqu'en mouvement, l'un rentrant, l'autre sortant.

4. Actionneur (1) selon l'une des revendications précédentes, comprenant un bâti supportant les organes menant (21) et comprenant une première et une deuxième parties articulées selon un axe parallèle aux axes des organes menant (21), et un verrou d'articulation capable de bloquer de manière libérable les première et une deuxième parties l'une par rapport à l'autre selon un angle choisi, ledit angle choisi définissant l'angle entre le premier tronçon droit (40) et le deuxième tronçon droit (50).

5. Actionneur (1) selon l'une des revendications précédentes, comprenant quatre organes menant (21), un par deuxième face (6) de brin d'actionnement du premier tronçon droit (40) et un par deuxième face (6) de brin d'actionnement du deuxième tronçon droit (50).

6. Actionneur (1) selon l'une des revendications précédentes, dans lequel chaque organe menant (21) comprend une première denture (22) en prise avec les dents (20) de la deuxième face (6) d'un des brins d'actionnement (2, 3), et une deuxième denture (23) concentrique à la première denture (22) et en prise avec la deuxième denture (23) de l'organe menant (21) engrenant avec les dents (20) de la deuxième face (6) de l'autre brin d'actionnement, dans le premier tronçon droit (40) d'une part et dans le deuxième tronçon droit (50) d'autre part, et un pignon moteur (26) est en prise avec les deuxièmes dentures de deux desdits organes menant (21), un par tronçon droit.

7. Actionneur (1) selon la revendication 5, dans lequel la deuxième denture (23) est décalée par rapport à la première denture (22) selon l'axe dudit organe menant (21) et disposée au voisinage d'une face frontale des plots 7, la première denture (22) est droite ou en chevrons et la deuxième denture (23) est hélicoïdale ou en chevrons, et chaque organe menant (21) comprend deux deuxièmes dentures d'un côté et de l'autre de la première denture (22).

8. Actionneur (1) selon la revendication 5 ou 6, dans lequel le pignon moteur (26) présente un axe disposé entre les brins d'actionnement (2, 3) dans la région courbe (60) et est en prise avec les deuxièmes dentures (23) de deux organes menant (21) disposés du côté intérieur ou du côté extérieur de la région courbe (60).

9. Actionneur (1) selon l'une des revendications précédentes, comprenant quatre pignons de guidage (24) en prise avec les brins d'actionnement (2, 3), un par deuxième face (6) de brin d'actionnement du premier tronçon droit (40) et un par deuxième face (6) de brin d'actionnement du deuxième tronçon droit (50), les axes des pignons de guidage (24) étant à distance des axes des organes menant (21), les pignons de guidage (24) étant montés fous ou entraînés par les organes menant (21).

10. Actionneur (1) selon l'une des revendications précédentes, dans lequel des guides (72, 73) sont disposés en contact avec la deuxième face (6) du brin d'actionnement (3) disposé à l'extérieur de la région courbe (60).

## Patentansprüche

1. Multilinearer Aktuator (1), der in der Lage ist, eine Zugkraft und eine Schubkraft in mindestens zwei verschiedenen Richtungen entlang von sich schneidenden Achsen zu übertragen, wobei der Aktuator (1) mindestens zwei ergänzende Betätigungsstränge (2, 3) umfasst, die aus einem flexiblen synthetischen Material hergesellt und an einer ihrer Flächen mit gleichmäßig beabstandeten Stiften (7) versehen sind, wobei jeder Stift (7) mit zwei gegenüberliegenden Frontflächen (8), einer vorderen aktiven Querfläche (9), einer hinteren aktiven Querfläche (10), einer aktiven Längsfläche (11), die die vordere aktive Querfläche (9) und die hintere aktive Querfläche (10) trennt, und einer Längsverbindungsfläche (12) zum Strang versehen ist, wobei die Stifte (7), mit denen die jeweiligen ersten Flächen (5) der beiden gegenüberliegenden Betätigungsstränge (2, 3) ausgestattet sind, ineinander greifen, und die vordere und die hintere aktive Querfläche (9, 10) eines Stifts (7) eines der Betätigungsstränge (2, 3) sich jeweils gegen die hintere und die vordere Querfläche von zwei zugehörigen benachbarten Stiften (7) des anderen Betätigungsstrangs (3, 2) stützen und dabei einen Abschnitt definieren, der sich entlang einer geraden Linie erstreckt und in dem die beiden Betätigungsstränge (2, 3) fest miteinander verbunden sind, und die Form und die Abmessungen des zwischen den Stiften (7) des Betätigungsstrangs liegenden Raums komplementär zu denen der zugehörigen benachbarten Stifte (7) des anderen Betätitungsstrangs sind, wobei Segmente (16) der jeweiligen ersten Flächen (5) der beiden Betätigungsstränge (2, 3), die die Stifte (7) trennen, sowie die Längsflächen der Stifte (7) mit Kerben versehen sind, wobei die Kerben der Längsfläche eines Stifts (7) eines der Betätigungsstränge (2, 3) mit entsprechenden Kerben des Segments der ersten Fläche des anderen Strangs zusammenwirken, die sich zwischen den beiden dem Stift (7) zugehörigen Stiften (7) befinden, indem sie mit den entsprechenden Kerben kämmen, wenn die beiden Betätigungsstränge (2, 3) fest miteinander verbunden sind, so dass sich der lineare Aktuatorabschnitt (1) wie eine starre einteilige Stange verhält, wobei die Betätigungsstränge (2, 3) an einer zweiten ihrer Flächen gegenüber der ersten Fläche (5) gleichmäßig beabstandete Zähne (20) umfassen, wobei der Aktuator (1) ein treibendes Element (21) pro Betätigungsstrang (2, 3) umfasst, wobei jedes treibende Element (21) in die Zähne (20) der zweiten Fläche (6) eines der Betätigungsstränge (2, 3) eingreift, um den Betätigungsstrang (2, 3) translatorisch anzutreiben, wobei der Aktuator (1) einen ersten geraden Abschnitt (40), in den die Betätigungsstränge (2, 3) eingreifen, einen zweiten geraden Abschnitt (50), in den die Betätigungsstränge (2, 3) eingreifen, und einen zwischen dem ersten geraden Abschnitt (40) und dem zweiten geraden Abschnitt (50) liegenden gekrümmten Bereich (60) umfasst, in dem die Betätigungsstränge (2, 3) voneinander beabstandet sind.

2. Aktuator (1) nach Anspruch 1, wobei die Betätigungsstränge (2, 3) im gekrümmten Bereich (60) voneinander unabhängig sind, der innerhalb der Krümmung befindliche Betätigungsstrang eine Konkavität aufweist und der außerhalb der Krümmung befindliche Betätigungsstrang eine Konvexität, eine Konkavität und eine Konvexität aufweist und in dem gekrümmten Bereich (60) mehr Stifte (7) als der innerhalb der Krümmung befindliche Betätigungsstrang aufweist.

3. Aktuator (1) nach Anspruch 1, umfassend eine gerade Anzahl von geraden Abschnitten (40, 50), innerhalb derer die Betätigungsstränge (2, 3) ineinandergreifen, und einen zwischen den geraden Abschnitten (40, 50) befindlichen gekrümmten Bereich (60), in dem die Betätigungsstränge (2, 3) voneinander beabstandet sind, wobei ein Betätigungsstrang (2, 3) Teil von zwei geraden Abschnitten (40, 50) ist und mit einem vorderen Betätigungsstrang und mit einem hinteren Betätigungsstrang schräg verzahnt ist, wobei bei den schräg benachbarten geraden Abschnitten während der Bewegung einer einfahrend und der andere ausfahrend ist.

4. Aktuator (1) nach einem der vorhergehenden Ansprüche, umfassend ein Gestell, das die treibenden Elemente (21) trägt und einen ersten und einen zweiten Teil umfasst, die entlang einer Achse parallel zu den Achsen der treibenden Elemente (21) gelenkig sind, und eine Gelenkverriegelung, die in der Lage ist, den ersten und den zweiten Teil in einem gewählten Winkel zueinander lösbar zu arretieren, wobei der gewählte Winkel den Winkel zwischen dem ersten geraden Abschnitt (40) und dem zweiten geraden Abschnitt (50) definiert.

5. Aktuator (1) nach einem der vorhergehenden Ansprüche, umfassend vier treibende Elemente (21), eines pro zweiter Fläche (6) des Betätigungsstrangs des ersten geraden Abschnitts (40) und eines pro zweiter Fläche (6) des Betätigungsstrangs des zweiten geraden Abschnitts (50) .

6. Aktuator (1) nach einem der vorhergehenden Ansprüche, wobei jedes treibende Element (21) eine erste Verzahnung (22) umfasst, die in Eingriff mit den Zähnen (20) der zweiten Fläche (6) eines der Betätigungsstränge (2, 3) ist, und eine zweite Verzahnung (23), die konzentrisch mit der ersten Verzahnung (22) ist und mit der zweiten Verzahnung (23) des treibenden Elements (21), die mit den Zähnen (20) der zweiten Fläche (6) des anderen Betätigungsstrangs in Eingriff steht, im ersten geraden Abschnitt (40) einerseits und im zweiten geraden Abschnitt (50) andererseits in Eingriff steht, und ein Motorritzel (26) mit der zweiten Verzahnung von zwei der treibenden Elemente (21), eines pro geradem Abschnitt, in Eingriff steht.

7. Aktuator (1) nach Anspruch 5, wobei die zweite Verzahnung (23) in Bezug auf die erste Verzahnung (22) entlang der Achse des treibenden Elements (21) versetzt und in der Nähe einer Frontfläche der Stifte 7 angeordnet ist, die erste Verzahnung (22) gerade oder mit Pfeilverzahnung ausgeführt ist und die zweite Verzahnung (23) spiralförmig oder mit Pfeilverzahnung ausgeführt ist, und jedes treibende Element (21) zwei zweite Verzahnungen auf beiden Seiten der ersten Verzahnung (22) umfasst.

8. Aktuator (1) nach Anspruch 5 oder 6, wobei das Motorritzel (26) eine zwischen den Betätigungssträngen (2, 3) im gekrümmten Bereich (60) angeordnete Achse aufweist und mit den zweiten Verzahnungen (23) zweier an der Innen- oder Außenseite des gekrümmten Bereichs (60) angeordneter treibender Elemente (21) in Eingriff steht.

9. Aktuator (1) nach einem der vorhergehenden Ansprüche, umfassend vier Führungsritzel (24), die mit den Betätigungssträngen (2, 3) in Eingriff stehen, eines pro zweiter Fläche (6) des Betätigungstrangs des ersten geraden Abschnitts (40) und einer pro zweiter Fläche (6) des Betätigungstrangs des zweiten geraden Abschnitts (50), wobei die Achsen der Führungsritzel (24) im Abstand von den Achsen der treibenden Elemente (21) sind, wobei die Führungsritzel (24) frei drehbar gelagert oder von den treibenden Elementen (21) angetrieben werden.

10. Aktuator (1) nach einem der vorhergehenden Ansprüche, wobei Führungen (72, 73) in Kontakt mit der zweiten Fläche (6) des außerhalb des gekrümmten Bereichs (60) angeordneten Betätigungsstrangs (3) angeordnet sind.

## Claims

1. Multi-linear actuator (1) capable of transmitting a tensile force and a thrust force in at least two different directions along intersecting axes, said actuator (1) comprising at least two complementary actuation strands (2, 3) made of flexible synthetic material, and provided on a first of their faces with pads (7) regularly spaced apart, each pad (7) being provided with two opposite front faces (8), a front transverse active face (9), a rear transverse active face (10), a longitudinal active face (11) separating the front transverse active face (9) and the rear transverse active face (10), and a longitudinal face (12) connecting with the strand, the pads (7) equipping the respective first faces (5) of the two actuation strands (2, 3) located opposite each other mesh with each other, and the front and rear transverse active faces (9, 10) of a pad (7) of one of the actuating strands (2, 3) bear respectively against the respective rear and front transverse faces of two associated neighbouring pads (7) of the other actuating strand (3, 2), thus defining a section extending along a straight line in which the two actuating strands (2, 3) are integrally joined, and the shape and dimensions of the space lying between the pads (7) of said actuating strand are complementary to those of the associated neighbouring pads (7) of the other actuating strand, segments (16) of the respective first faces (5) of the two actuation strands (2, 3) separating the pads (7), as well as the longitudinal faces of said pads (7), are provided with notches, the notches of the longitudinal face of a pad (7) of one of the actuation strands (2, 3) cooperating with corresponding notches of the segment of the first face of the other strand located between the two pads (7) associated with said pad (7) by nesting in said corresponding notches when the two actuation strands (2, 3) are joined together integrally, such that the linear actuator (1) section behaves as a rigid bar in a single piece, said actuating strands (2, 3) comprising on a second of their faces, opposite the first face (5), teeth (20) evenly spaced apart, said actuator (1) comprising one driving member (21) per actuating strand (2, 3), each driving member (21) engaging with the teeth (20) of the second face (6) of one of said actuating strands (2, 3) to drive said actuation strand (2, 3) in translation, said actuator (1) comprising a first straight section (40) in which the actuation strands (2, 3) are engaged, a second straight section (50) wherein the actuation strands (2, 3) are engaged, and a curved region (60) located between the first straight section (40) and the second straight section (50), wherein the actuation strands (2, 3) are separated from each other.

2. Actuator (1) according to claim 1, wherein the actuation strands (2, 3) are independent of each other in the curved region (60), the actuation strand located inside the curve has a concavity and the actuation strand located outside the curve has a convexity, a concavity and a convexity, and has in said curved region (60) more pads (7) than the actuation strand located inside the curve.

3. Actuator (1) according to claim 1, comprising an even number of straight sections (40, 50) within which the actuation strands (2, 3) are engaged, and a curved region (60) located between the straight sections (40, 50) wherein the actuation strands (2, 3) are spaced apart from each other, an actuation strand (2, 3) forming part of two straight sections (40, 50) and angularly engaged with a front actuation and with a rear actuation strand, said angularly adjacent straight sections being, when in motion, one entering, the other exiting.

4. Actuator (1) according to one of the preceding claims, comprising a frame supporting the driving members (21) and comprising first and second parts articulated on an axis parallel to the axes of the driving members (21), and an articulation lock capable of releasably locking the first and a second parts relative to one another at a selected angle, said selected angle defining the angle between the first straight section (40) and the second straight section (50).

5. Actuator (1) according to one of the preceding claims, comprising four driving members (21), one per second face (6) of actuation strand of the first straight section (40) and one per second face (6) of actuation strand of the second straight section (50).

6. Actuator (1) according to one of the preceding claims, wherein each driving member (21) comprises a first toothing (22) engaging with the teeth (20) of the second face (6) of one of the actuating strands (2, 3), and a second toothing (23) concentric with the first toothing (22) and engaging with the second toothing (23) of the driving member (21) engaging with the teeth (20) of the second face (6) of the other actuation strand, in the first straight section (40) on the one hand and in the second straight section (50) on the other hand, and a motor pinion (26) is engaged with the second toothing of two of said driving members (21), one per straight section.

7. Actuator (1) according to claim 5, wherein the second toothing (23) is offset with respect to the first toothing (22) along the axis of said driving member (21) and disposed in the vicinity of a front face of the pads 7, the first toothing (22) is straight or herringbone-shaped and the second toothing (23) is helical or herringbone-shaped, and each driving member (21) comprises two second toothings on either side of the first toothing (22).

8. Actuator (1) according to claim 5 or 6, wherein the motor pinion (26) has an axis disposed between the actuating strands (2, 3) in the curved region (60) and is engaged with the second toothing (23) of two driving members (21) disposed on the inner side or the outer side of the curved region (60).

9. Actuator (1) according to one of the preceding claims, comprising four guide pinions (24) engaged with the actuation strands (2, 3), one per second face (6) of an actuation strand of the first straight section (40) and one per second face (6) of an actuation strand of the second straight section (50), the axes of the guide pinions (24) being at a distance from the axes of the driving members (21), the guide pinions (24) being mounted loose or driven by the driving members (21).

10. Actuator (1) according to one of the preceding claims, wherein guides (72, 73) are disposed in contact with the second face (6) of the actuation strand (3) disposed outside the curved region (60).
